(19)

**Europäisches Patentamt**
**European Patent Office**
**Office européen des brevets**

(11) **EP 4 365 247 B1**

(12) **EUROPEAN PATENT SPECIFICATION**

(45) Date of publication and mention
of the grant of the patent:
**25.02.2026 Bulletin 2026/09**

(21) Application number: **22832586.6**

(22) Date of filing: **25.04.2022**

(51) International Patent Classification (IPC):
**C09D 11/03** (2014.01)    **C09D 11/023** (2014.01)
**C09D 11/12** (2006.01)    **C09D 11/106** (2014.01)
**C09D 11/107** (2014.01)

(52) Cooperative Patent Classification (CPC):
**C09D 11/107; C09D 11/023; C09D 11/03;**
**C09D 11/106; C09D 11/12**

(86) International application number:
**PCT/JP2022/018756**

(87) International publication number:
**WO 2023/276426 (05.01.2023 Gazette 2023/01)**

(54) **WATER-BASED WHITE INK COMPOSITION FOR SURFACE-PRINTED FLEXIBLE PACKAGING**

WÄSSRIGE WEISSE TINTENZUSAMMENSETZUNG FÜR OBERFLÄCHENGEDRUCKTE
FLEXIBLE VERPACKUNG

COMPOSITION D'ENCRE BLANCHE À BASE D'EAU POUR EMBALLAGE SOUPLE À SURFACE
IMPRIMÉE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.06.2021 JP 2021109018**

(43) Date of publication of application:
**08.05.2024 Bulletin 2024/19**

(73) Proprietor: **Sakata INX Corporation**
**Osaka-shi, Osaka 550-0002 (JP)**

(72) Inventors:
• **SYU, Saiei**
**Osaka-shi, Osaka 550-0002 (JP)**

• **MORIYASU, Kazuki**
**Osaka-shi, Osaka 550-0002 (JP)**
• **MAEDA, Hirohito**
**Osaka-shi, Osaka 550-0002 (JP)**

(74) Representative: **Brann AB**
**P.O. Box 3690**
**Sveavägen 63**
**103 59 Stockholm (SE)**

(56) References cited:
**EP-A1- 3 730 560      JP-A- 2016 155 340**
**JP-A- 2017 190 416      JP-A- 2018 076 431**
**JP-A- 2020 059 822      JP-A- 2021 038 022**

**Description**

TECHNICAL FIELD

The present invention relates to an aqueous white ink composition for surface-printed flexible packaging. More particularly, the present invention relates to an aqueous white ink composition for surface-printed flexible packaging which is excellent in heat resistance, blocking resistance, alcohol resistance, abrasion resistance, solid uniformity, and bleeding resistance.

BACKGROUND ART

Conventionally, flexible packaging materials using various plastic films have been used for food, confectionery, household goods, pet food, and the like, from the viewpoints of design, economy, content protection, transportability, and the like. Moreover, many flexible packaging materials are subjected to gravure printing or flexographic printing. Surface printing is applied to a surface of a base film of a flexible packaging material. A white ink is printed on the film surface so that a clear design or the like can be printed thereon. Therefore, a white ink composition used for surface printing on a flexible packaging material has been developed (for example, Patent Document 1). The ink composition described in Patent Document 1 comprises an anionic surfactant to improve heat resistance. Additionally, JP 2018-076431 might be cited as prior art.

PRIOR ART DOCUMENT

Patent Document

Patent Document 1: JP 2020-59822 A

SUMMARY OF THE INVENTION

The ink composition described in Patent Document 1 has room for improvement in terms of heat resistance. Moreover, the ink composition described in Patent Document 1 also has room for improvement in terms of blocking resistance, alcohol resistance, and solid uniformity.
The present invention has been made in view of such conventional problems, and it is an object of the present invention to provide an aqueous white ink composition for surface-printed flexible packaging which is excellent in heat resistance, blocking resistance, alcohol resistance, abrasion resistance, solid uniformity, and bleeding resistance.
As a result of intensive studies for solving the above-described problems, the present inventors have found that heat resistance of the ink composition is greatly improved by compounding N-oleoyl sarcosine that has been conventionally used as a antirust agent. In addition, the present inventors have found that the above-described problems can be solved as well by compounding an acryl-based resin emulsion emulsified with a polymer, which exhibits a specific amount and a specific glass transition temperature, a hydrazine-based compound having a specific structure, and wax, and completed the present invention.
An aqueous white ink composition for surface-printed flexible packaging according to one aspect of the present invention for solving the above-described problems comprises a white pigment, an acryl-based resin emulsion emulsified with a polymer, N-oleoyl sarcosine, a hydrazine-based compound having at least two or more hydrazine residues in a molecule, and wax, wherein a content of the acryl-based resin emulsion is 3 to 40% by mass in terms of solid content, and wherein a glass transition temperature of the acryl-based resin emulsion is -40 to 30°C.

EMBODIMENT FOR CARRYING OUT THE INVENTION

<Aqueous white ink composition for surface-printed flexible packaging>

The aqueous white ink composition for surface-printed flexible packaging according to one aspect of the present invention for solving the above-described problems (hereinafter also referred to as the ink composition) comprises a white pigment, an acryl-based resin emulsion emulsified with a polymer, N-oleoyl sarcosine, a hydrazine-based compound having at least two or more hydrazine residues in a molecule, and wax. A content of the acryl-based resin emulsion is 3 to 40% by mass in terms of solid content. A glass transition temperature of the acryl-based resin emulsion is -40 to 30°C. Each component will be described below.

(White pigment)

A white pigment is not particularly limited. By way of an example, the white pigment is a variety of inorganic white pigments, organic white pigments, or the like. The inorganic white pigment is titanium oxide, zinc oxide, cerium oxide, silica, alumina, magnesium oxide, zirconium dioxide, yttria-stabilized zirconium, indium oxide, antimony oxide, tin oxide, barium titanate, barium sulfate, calcium carbonate, fine-powdered silicic acid, calcium silicate, talc, clay, or the like. The organic white pigment is an organic compound salt disclosed in JP H11-129613 A, an alkylenebismelamine derivative disclosed in JP H11-140365 A and JP 2001-234093 A, or the like. Among them, the white pigment is preferably a variety of titanium oxide such as a rutile type and an anatase type, and more preferably titanium oxide whose surface is coated with alumina, silica, organic matter, or the like, from the viewpoint of its excellent concealment.

An average particle size of the white pigment is not particularly limited. By way of an example, the average particle size of the white pigment is preferably 100 nm or more, and more preferably 150 nm or more. Moreover, the average particle size of the white pigment is preferably 500 nm or less, and more preferably 400 nm or less. When the average particle size of the white pigment is within the above-described ranges, the ink composition has an excellent concealment. Besides, in the present embodiment, the average particle size is a volume average particle size measured by a laser diffraction particle size measurement method using Nanotrac (UPA-EX150, manufactured by Nikkiso Co., Ltd.).

A content of the white pigment is not particularly limited. By way of an example, the content of the white pigment is preferably 5% by mass or more, and more preferably 10% by mass or more, in the ink composition. Moreover, the content of the white pigment is preferably 20% by mass or less, and more preferably 15% by mass or less, in the ink composition. When the content of the white pigment is within the above-described ranges, the ink composition has an excellent concealment. In addition, when the ink composition is applied to a flexible packaging material and then a design such as an industrial design is printed thereon, the design, or the like is easily visible.

(Acryl-based resin emulsion emulsified with polymer)

The acryl-based resin emulsion of the present embodiment is an acryl-based resin emulsion emulsified with a polymer compound. Moreover, a glass transition temperature of the acryl-based resin emulsion is -40 to 30°C. The acryl-based resin emulsion emulsified with a polymer may take a core-shell structure consisting of a shell that is a polymer functioning as a polymer emulsifier and a core that consists of a resin that is more hydrophobic than the shell. Besides, the acryl-based resin emulsion emulsified with a polymer of the present embodiment is distinguished from an acryl-based resin emulsion emulsified with an emulsifier such as a surfactant, which is a low molecular weight compound.

The acryl-based resin emulsion emulsified with a polymer is not particularly limited. By way of an example, the acryl-based resin emulsion emulsified with a polymer is an acrylic resin emulsion, a styrene-acryl-based resin emulsion, an acryl-vinyl acetate-based resin emulsion, an acryl-vinyl chloride-based resin emulsion, an acryl-silicone-based resin emulsion, an acryl-colloidal silica-based resin emulsion, or the like. Among them, the acryl-based resin emulsion emulsified with a polymer is preferably an acrylic resin emulsion emulsified with a polymer (i.e., an "acrylic resin emulsion", not an "acryl"-based" resin emulsion of mixed system") because it is excellent in transparency and coating film resistance.

A glass transition temperature (Tg) of the acryl-based resin emulsion emulsified with a polymer may be -40°C or higher, preferably -20°C or higher. Moreover, the glass transition temperature (Tg) of the acryl-based resin emulsion emulsified with a polymer may be 30°C or lower, preferably 20°C or lower. When the Tg is less than -40°C, the ink composition has a problem that blocking resistance of a coating film deteriorates. On the other hand, when the Tg exceeds 30°C, the ink composition has a problem that adhesiveness to a film is lowered, deteriorating coating film resistance. Besides, a glass transition temperature of a resin in the present embodiment is a theoretical glass transition temperature as calculated by the following Wood's equation, when the resin is an acryl-based copolymer resin.

$$\text{Wood's equation: } 1/Tg = W1/Tg1 + W2/Tg2 + W3/Tg3 + .... + Wx/Tgx$$

[wherein, Tg1 to Tgx represent respective glass transition temperatures of homopolymers of the monomers 1, 2, 3...x each constituting resin, W1 to Wx represent respective polymerization fractions of 1, 2, 3...x, and Tg represents a theoretical glass transition temperature. However, the glass transition temperature in Wood's equation is an absolute temperature.]

An acid value of the acryl-based resin emulsion emulsified with a polymer is preferably 10 mgKOH/g or more, and more preferably 40 mgKOH/g or more. Moreover, the acid value is preferably 100 mgKOH/g or less, and more preferably 80 mgKOH/g or less. When the acid value is within the above-described ranges, the ink composition has an advantage that solubility in water does not become too high, improving abrasion resistance and alcohol resistance of a coating film. Besides, in the present embodiment, the acid value of the acryl-based resin emulsion is a theoretical acid value obtained by arithmetically calculating the number of mg of potassium hydroxide which is theoretically required for neutralizing 1 g of the acryl-based resin emulsion, based on composition of a monomer used for synthesizing the acryl-based resin emulsion.

A content of the acryl-based resin emulsion emulsified with a polymer may be 3% by mass or more, preferably 10% by mass or more, in terms of solid content, in the ink composition. Moreover, the content of the acryl-based resin emulsion emulsified with a polymer may be 40% by mass or less, preferably 25% by mass or less, in terms of solid content, in the ink composition. When the content of the acryl-based resin emulsion emulsified with a polymer is less than 3% by mass, the ink composition has a poor alcohol resistance. On the other hand, when the content of the acryl-based resin emulsion emulsified with a polymer exceeds 40% by mass, the ink composition has a problem that storage stability deteriorates.

(N-oleoyl sarcosine)

N-oleoyl sarcosine is compounded for imparting heat resistance to the ink composition. In this way, the ink composition of the present embodiment is characterized in that N-oleoyl sarcosine, which has been conventionally used as an antirust agent, may further impart heat resistance without deteriorating various characteristics, for applications of the aqueous white ink composition for surface-printed flexible packaging.

A content of N-oleoyl sarcosine is not particularly limited. By way of an example, the content of N-oleoyl sarcosine is preferably 0.05% by mass or more, and more preferably 0.1% by mass or more, in the ink composition. Moreover, the content of N-oleoyl sarcosine is preferably 6% by mass or less, and more preferably 2% by mass or less, in the ink composition. When the content of N-oleoyl sarcosine is within the above-described ranges, the ink composition has an excellent heat resistance. In addition, the ink composition has an excellent storage stability.

(Hydrazine-based compound having at least two or more hydrazine residues in molecule)

The hydrazine-based compound having at least two or more hydrazine residues in a molecule is compounded for imparting alcohol resistance to the ink composition.

The hydrazine compound has two or more hydrazine residues and is preferably a water-soluble polyhydrazine or hydrazide compound. Moreover, the hydrazine compound is preferably hydrazine, alkylenedihydrazine represented by the following general formula (1), a dihydrazide compound of a saturated aliphatic dibasic acid or unsaturated dibasic acid, or the like.

$$H_2N\text{-}NH\text{-}X\text{-}NH\text{-}NH_2 \qquad (1)$$

(wherein X represents an alkylene group having 1 to 8 carbon atoms or a residue of a saturated or unsaturated dibasic acid having 1 to 10 carbon atoms).

Alkylene dihydrazine is methylene dihydrazine, ethylene dihydrazine, propylene dihydrazine, butylene dihydrazine, or the like. The dihydrazide compound of a saturated aliphatic dibasic acid is oxalic acid dihydrazide, malonic acid dihydrazide, succinic acid dihydrazide, glutaric acid dihydrazide, adipic acid dihydrazide, sebacic acid dihydrazide, or the like. The dihydrazide compound of an unsaturated dibasic acid is dihydrazide phthalate, dihydrazide fumarate, dihydrazide itaconate, or the like.

A content of the hydrazine-based compound having at least two or more hydrazine residues in a molecule is not particularly limited. By way of an example, the content of the hydrazine-based compound having at least two or more hydrazine residues in a molecule is preferably 0.05% by mass or more, and more preferably 0.1% by mass or more, in the ink composition. Moreover, the hydrazine-based compound having at least two or more hydrazine residues in a molecule is preferably 6% by mass or less, and more preferably 3% by mass or less, in the ink composition. When the content of the hydrazine-based compound having at least two or more hydrazine residues in a molecule is within the above-described ranges, the ink composition has an excellent alcohol resistance. In addition, the ink composition has an excellent storage stability.

(Wax)

Wax is compounded for improving abrasion resistance. Wax is not particularly limited. By way of an example, wax includes animal and plant waxes such as beeswax, lanolin wax, spermaceti, candelilla wax, carnauba wax, rice wax, Japan wax, and jojoba oil; minerals such as montan wax, ozokerite, ceresin, paraffin wax, microcrystalline wax, and petrolatum; synthetic hydrocarbon waxes such as petroleum-based wax, Fischer-Tropsch wax, polyethylene wax, polyethylene oxide wax, and polypropylene oxide wax; fluororesin-based waxes such as polytetrafluoroethylene wax; modified waxes such as a mixture of polytetrafluoroethylene wax and polyethylene wax, a montan wax derivative, a paraffin wax derivative, and a microcrystalline wax derivative; hydrogenated waxes such as hydrogenated castor oil and a hydrogenated castor oil derivative; polytetrafluoroethylene wax; and the like. Among then, wax is preferably polyethylene wax, a mixture of polytetrafluoroethylene wax and polyethylene wax, fluororesin wax, Fischer-Tropsch wax, or the like.

An average particle size of wax is not particularly limited. By way of an example, the average particle size of wax is preferably 0.05 μm or more, and more preferably 0.1 μm or more. Moreover, the average particle size of wax is preferably 6 μm or less, and more preferably 5 μm or less. The ink composition of the present embodiment may be improved in blocking resistance by compounding a wax having a relatively large particle size as described above. Besides, in the present embodiment, the average particle size of wax may be measured with Nanotrac (UPA-EX150, manufactured by Nikkiso Co., Ltd.).

A content of wax is not particularly limited. By way of an example, the content of wax is preferably 0.05% by mass or more, and more preferably 0.1% by mass or more, in terms of solid content, in the ink composition. Moreover, the content of the wax is preferably 12% by mass or less, and more preferably 4% by mass or less, in terms of solid content, in the ink composition. When the content of the wax is within the above-described ranges, the ink composition has an excellent blocking resistance.

(Chlorinated polyolefin)

The ink composition of the present embodiment may comprise a chlorinated polyolefin. The chlorinated polyolefin is preferably used in a form of a chlorinated polyolefin emulsion. The chlorinated polyolefin emulsion is obtained by chlorinating and emulsifying a polyolefin resin.

The chlorinated polyolefin is not particularly limited. By way of an example, examples of the chlorinated polyolefin include a chlorinated polypropylene resin, a chlorinated polyethylene resin, and the like. Moreover, the chlorinated polyolefin may be a modified product. The modified product is not particularly limited. By way of an example, the modified product of chlorinated polyolefin includes those obtained by graft-polymerizing a chlorinated polyolefin with a polymerizable acrylic compound (acrylic acid, methacrylic acid, or alkyl ester thereof, etc.) or an unsaturated polycarboxylic acid (maleic acid, maleic anhydride, itaconic acid, itaconic anhydride, etc.), or those obtained by chlorinating the above-described polyolefin graft-polymerized with the unsaturated polycarboxylic acid, etc.

A chlorine content in the chlorinated polyolefin is not particularly limited. By way of an example, the chlorine content is preferably 1% by mass or more, and more preferably 10% by mass or more, based on the entire resin. Moreover, the chlorine content is preferably 40% by mass or less, and more preferably 30% by mass or less, based on the entire resin. When the chlorine content is within the above-described ranges, the chlorinated polyolefin is easily dissolved in a solvent and has an excellent adhesiveness between the base material and the ink composition.

When the ink composition comprises a chlorinated polyolefin, a content of the chlorinated polyolefin is not particularly limited. By way of an example, the content of the chlorinated polyolefin is preferably 0.5% by mass or more, and more preferably 1% by mass or more, in terms of solid content, in the ink composition. Moreover, the content of the chlorinated polyolefin is preferably 5% by mass or less, and more preferably 2% by mass or less, in terms of solid content, in the ink composition. When the content of the chlorinated polyolefin is within the above-described ranges, the ink composition has an excellent adhesiveness to a polyolefin film such as OPP.

(Water-soluble organic solvent)

The ink composition of the present embodiment preferably further comprises a water-soluble organic solvent. When the ink composition comprises a water-soluble organic solvent, it is further excellent in solid uniformity.

The water-soluble organic solvent is not particularly limited. By way of an example, the water-soluble organic solvent preferably includes an alcohol and a polyhydric alcohol-based solvent, and more preferably includes methanol, ethanol, propanol, butanol, hexanol, ethylene glycol, ethylene glycol monomethyl ether, ethylene glycol monoethyl ether, ethylene glycol monopropyl ether, ethylene glycol monobutyl ether, ethylene glycol monooctyl ether, diethylene glycol, diethylene glycol monoethyl ether, diethylene glycol monopropyl ether, diethylene glycol monobutyl ether, triethylene glycol, triethylene glycol monomethyl ether, triethylene glycol monoethyl ether, triethylene glycol monopropyl ether, triethylene glycol monobutyl ether, propylene glycol, propylene glycol monoethyl ether, propylene glycol monopropyl ether, propylene glycol monobutyl ether, dipropylene glycol, dipropylene glycol monomethyl ether, dipropylene glycol monoethyl ether, dipropylene glycol monopropyl ether, dipropylene glycol monobutyl ether, tripropylene glycol, tripropylene glycol monomethyl ether, tripropylene glycol monoethyl ether, tripropylene glycol monopropyl ether, tripropylene glycol monobutyl ether, dibutyl glycol, glycerin, and the like.

When the ink composition comprises a water-soluble organic solvent, a content of the water-soluble organic solvent is not particularly limited. By way of an example, the content of the water-soluble organic solvent is preferably 0.1% by mass or more, and more preferably 0.5% by mass or more, in the ink composition. Moreover, the content of the water-soluble organic solvent is preferably 20% by mass or less, and more preferably 10% by mass or less, in the ink composition. When the content of the water-soluble organic solvent is within the above-described ranges, the ink composition is further excellent in solid uniformity.

(Optional components)

Various additives such as a tackifier, a cross-linking agent, a lubricant, an anti-blocking agent, an antistatic agent, a surfactant, a chelating agent, and a hard resin may be appropriately compounded in the ink composition of the present embodiment.

(Method of producing ink composition)

A method of producing the ink composition of the present embodiment is not particularly limited. By way of an example, the ink composition may be prepared by a method of stirring and mixing a white pigment, an acryl-based resin emulsion emulsified with a polymer, N-oleoyl sarcosine, a hydrazine-based compound having at least two or more hydrazine residues in a molecule, wax, and various optional components, and then kneading the mixture utilizing a variety of kneaders such as, for example, a bead mill, a ball mill, a sand mill, an attritor, a roll mill, and a pearl mill.

The obtained ink composition preferably has a viscosity of 10 to 1000 mPa·s. Moreover, when the ink composition is used for gravure printing, it is preferably diluted with water or an organic solvent so as to have an appropriate viscosity according to a printing condition, specifically so as to have a flow-out second of 12 to 23 sec/25°C with a Zahn cup No. 3, or about 14 to 16 sec/25°C for a high-speed printing, at an atmospheric temperature during printing.

The obtained ink composition may be printed as an aqueous white ink composition for surface-printed flexible packaging on an adherend such as various plastic films for flexible packaging by, for example, a gravure printing method or the like. Examples of the plastic films include oriented and non-oriented polyolefins such as polyethylene and polypropylene, polyester, nylon, cellophane, vinylon, and the like, in terms that they can be printed integrally with packaging materials. The obtained printed matter may be made into a bag and utilized as a packaging container for foods, etc.

As described above, according to the present embodiment, the ink composition is excellent in heat resistance, blocking resistance, alcohol resistance, abrasion resistance, solid uniformity, and bleeding resistance.

One embodiment of the present invention has been described above. The present invention is not particularly limited to the above-described embodiment. Besides, the above-described embodiment mainly describes an invention having the following configurations.

   (1) An aqueous white ink composition for surface-printed flexible packaging, comprising a white pigment, an acryl-based resin emulsion emulsified with a polymer, N-oleoyl sarcosine, a hydrazine-based compound having at least two or more hydrazine residues in a molecule, and wax, wherein a content of the acryl-based resin emulsion is 3 to 40% by mass in terms of solid content, and wherein a glass transition temperature of the acryl-based resin emulsion is -40 to 30°C.
   According to such a configuration, the aqueous white ink composition for surface-printed flexible packaging is excellent in heat resistance, blocking resistance, alcohol resistance, abrasion resistance, solid uniformity, and bleeding resistance.
   (2) The aqueous white ink composition for surface-printed flexible packaging of (1), wherein the wax has an average particle size of 0.1 to 6 μm.
   According to such a configuration, the aqueous white ink composition for surface-printed flexible packaging is further excellent in blocking resistance.
   (3) The aqueous white ink composition for surface-printed flexible packaging of (1) or (2), further comprising a water-soluble organic solvent.

According to such a configuration, the aqueous white ink composition for surface-printed flexible packaging is further excellent in solid uniformity.

EXAMPLE

Hereinafter, the present invention will be described in more detail with reference to Examples. The present invention is not limited to these Examples. Besides, unless otherwise specified, "%" means "% by mass", and "part" means "part by mass".

Raw materials used and a preparation method are shown below.

<Aqueous resin varnish>

20 parts by mass of an acrylic acid/n-butyl acrylate/benzyl methacrylate/styrene copolymer having a glass transition temperature at 40°C, a weight-average molecular weight of 30,000, and an acid value of 185 mgKOH/g was dissolved in a mixed solution of 2.5 parts by mass of potassium hydroxide and 77.5 parts by mass of water to obtain an aqueous resin varnish having a solid content of 20%.

<Preparation of aqueous white ink base>

10.0 parts by mass of water was added to 30.0 parts by mass of the aqueous resin varnish and mixed to prepare a resin varnish for pigment dispersion. To this varnish, 60 parts by mass of titanium oxide (R-960, manufactured by DuPont) was further added, stirred and mixed, and then the mixture was kneaded with a wet type circulation mill to prepare an aqueous white ink base.

<Resin emulsion>

(Acryl-based resin emulsion emulsified with polymer)

PE-1126 (solid content: 41.5%, acrylic resin emulsion emulsified with a polymer, manufactured by SEIKO PMC CORPORATION, Tg: -12°C)
JE-1113 (solid content: 42.5%, acrylic resin emulsion emulsified with a polymer, manufactured by SEIKO PMC CORPORATION, Tg: -24°C)
HE-1335 (solid content: 45.5%, acryl-styrene resin emulsion emulsified with a polymer, manufactured by SEIKO PMC CORPORATION, Tg: 15°C)
QE-1042 (solid content: 40.5%, acryl-styrene resin emulsion emulsified with a polymer, manufactured by SEIKO PMC CORPORATION, Tg: 53°C)

(Acryl-based resin emulsion emulsified with emulsifier)

Mowinyl 7320 (solid content: 40.0%, acrylic resin emulsion emulsified with an emulsifier, manufactured by Japan Coating Resin co., ltd., Tg: -20°C)
Mowinyl 730L (solid content: 46.0%, acrylic resin emulsion emulsified with an emulsifier, manufactured by Japan Coating Resin co., ltd., Tg: -13°C)
Neo-Cryl A-1125 (solid content: 19.5%, acrylic resin emulsion emulsified with an emulsifier, manufactured by DSM NeoResins, Tg: 13°C)
Neo-Cryl A-1093 (solid content: 45.5%, acryl-styrene resin emulsion emulsified with an emulsifier, manufactured by DSM NeoResins, Tg: 17°C)

<Wax emulsion>

AQUACER 531 (solid content: 45%, polyethylene resin emulsion, average particle size: 160 nm, manufactured by BYK Japan KK)
CHEMIPEARL W-400 (solid content: 40%, polyethylene resin emulsion, average particle size: 4.0 μm, manufactured by Mitsui Chemicals, Inc.)

<Examples 1 to 17, Comparative examples 1 to 10>

(Preparation of ink composition)

Each material was kneaded in a paint conditioner according to a mass ratio (% by mass) shown in Tables 1 and 2 below to prepare an ink composition. Storage stability of the obtained ink composition was evaluated. Moreover, the obtained ink composition was subjected to gravure printing under the following condition to obtain a printed matter. Solid uniformity, thin line (bleeding resistance), winding blocking property (blocking resistance), abrasion resistance, alcohol resistance, and heat resistance of the obtained printed matter were evaluated according to the following evaluation methods. The results are shown in Tables 1 and 2.

<Condition for creating printed matter>

The ink composition was printed under the following printing condition by utilizing a gravure printing machine on a treating surface of a base material, and dried to obtain a printed matter.

(Printing condition)

Base material: Biaxially oriented polypropylene film subjected to a corona discharge treatment, P-2111, manufactured by TOYOBO CO., LTD., thickness: 20 μm
Printing equipment: Gravure printing machine
Printing plate: Helio 175-line solid version
Printing speed: 15 m/min
Drying condition: 80°C

<Storage stability>

Each of the ink compositions of the above-described Examples and Comparative examples was placed in a glass bottle, and a viscosity at 25°C thereof was measured using a viscometer (RE100L type, manufactured by Toki Sangyo Co., Ltd.). Then, it was sealed and stored at 60°C for 1 month, and a viscosity (25°C) after storage thereof was measured with a viscometer.

Stability over time was evaluated with a rate of change in viscosity (100 × (60°C, viscosity after 1 month - viscosity before storage) / viscosity before storage).

(Evaluation criteria)

o: The rate of change in viscosity was less than 5%.
△: The rate of change in viscosity was 5% or more and less than 10%.
×: The rate of change in viscosity was 10% or more and less than 30%.

**<Solid** uniformity>

Solid uniformity of the obtained printed matter was visually observed and evaluated according to the following evaluation criteria.

(Evaluation criteria)

∘: **No** unevenness and streak were observed on the printed matter.
△: Slight unevenness and streak were observed on the printed matter.
×: Unevenness and streak were visually observed on the printed matter.

<Thin line>

Using the aqueous white ink compositions for surface-printed flexible packaging of Examples and Comparative examples, about 0.5 mm of a thin line was printed, and thickening due to bleeding was visually observed and evaluated according to the following criteria.

(Evaluation criteria)

o: **No** bleeding was observed, and printing was possible with the thickness as it was.

△ : Partial thickening was observed, but no double or more thickening was observed.

×: Double or more thickening was observed as a whole.

<Winding blocking property>

Immediately after printing with a gravure printing machine, winding blocking property was evaluated by the following method as to whether the printed matter could be pulled out from the roll without resistance and without generating peeling noise.

(Evaluation criteria)

o: No resistance was observed at all when the film was peeled off, and the ink did not peel off from the printed surface.

△: Resistance was observed when the film was peeled off, but the ink did not peel off from the printed surface.

×: Resistance was observed when the film was peeled off, and the ink peeled off from the printed surface.

<Abrasion resistance>

The obtained printed matter was cut into a 2.5 cm × 25 cm test piece, which was rubbed on its printed surface with a bleached cloth with a reciprocating load of 500 g × 100 times using a Gakushin-Type Rubbing Tester (manufactured by Daiei Kagaku Seiki MFG Co., Ltd.), and abrasion resistance was evaluated from a degree of falling-off of the ink according to the following evaluation criteria.

(Evaluation criteria)

o: The white ink coating film did not peel off at all.

△: The white ink coating film slightly peeled off.

×: The white ink coating film almost peeled off.

<Alcohol resistance>

The obtained printed matter was cut into a 2.5 cm × 25 cm test piece, which was rubbed on its printed surface with a bleached cloth permeated with 5 drops of 70% ethanol aqueous solution using an injection needle with a reciprocating load of 200 g × 10 times using a Gakushin-Type Rubbing Tester (manufactured by Daiei Kagaku Seiki MFG Co., Ltd.), and alcohol resistance was evaluated from a degree of falling-off of the ink according to the following evaluation criteria.

(Evaluation criteria)

o: The white ink coating film did not peel off at all.

△: The white ink coating film slightly peeled off.

×: The white ink coating film almost peeled off.

<Heat resistance>

Using a heat seal tester equipped with a hot plate having a thermal gradient at 160 to 200°C, a printed surface and an aluminum foil were pressed at a pressure of 2.0 kg/cm$^2$ for 1 second. From the minimum temperature at which the ink on the printed surface transferred to the aluminum foil, heat resistance was evaluated according to the following evaluation criteria.

(Evaluation criteria)

o: The minimum temperature at which the ink on the printed surface transferred to the aluminum foil was 200°C or higher.

△: The minimum temperature at which the ink on the printed surface transferred to the aluminum foil was 160°C or higher and lower than 200°C.

×: The minimum temperature at which the ink on the printed surface transferred to the aluminum foil was lower than 160°C.

Table 1

| | | | Example | | | | | | | | |
|---|---|---|---|---|---|---|---|---|---|---|---|
| | | | 1 | 2 | 3 | 4 | 5 | 6 | 7 | 8 | 9 |
| White ink base | | | 23.3 | 23.3 | 23.3 | 23.3 | 23.3 | 23.3 | 23.3 | 23.3 | 23.3 |
| Acryl-based resin emulsion (solid content) | Emulsified with polymer | Acryl (Tg - 12°C) PE-1126 | 20.0 | 5.0 | 30.0 | 20.0 | 20.0 | 20.0 | 20.0 | 20.0 | 20.0 |
| | Emulsified with polymer | Acryl (Tg - 24°C) JE-1113 | - | - | - | - | - | - | - | - | - |
| | Emulsified with polymer | Acryl-styrene (Tg 15°C) HE-1335 | - | - | - | - | - | - | - | - | - |
| | Emulsified with polymer | Acryl-styrene (Tg 53°C) QE-1042 | - | - | - | - | - | - | - | - | - |
| | Emulsified with emulsifier | Acryl (Tg - 20°C) Mowinyl 7320 | - | - | - | - | - | - | - | - | - |
| | Emulsified with emulsifier | Acryl (Tg - 13°C) Mowinyl 730L | - | - | - | - | - | - | - | - | - |
| | Emulsified with emulsifier | Acryl (Tg - 13°C) Neo-Cryl A-1125 | - | - | - | - | - | - | - | - | - |
| | Emulsified with emulsifier | Acryl-styrene (Tg 17°C) Neo-Cryl A-1093 | - | - | - | - | - | - | - | - | - |
| Chlorinated polyolefin emulsion (solid content) | | SUPERCHLON E480T | - | - | - | - | - | - | - | 2.0 | - |
| Hydrazide compound | | Adipic acid dihydrazide | 1.0 | 1.0 | 1.0 | 1.0 | 1.0 | 1.0 | 1.0 | 1.0 | 0.1 |
| | | N-oleoyl sarcosine | 0.9 | 0.9 | 0.9 | 0.9 | 0.9 | 0.9 | 0.9 | 0.9 | 0.9 |
| Wax emulsion (solid content) | | AQUACER531 | - | - | - | - | - | - | - | - | - |
| | | CHEMIPEARL W-400 | 2.0 | 2.0 | 2.0 | 2.0 | 2.0 | 2.0 | 2.0 | 2.0 | 2.0 |

(continued)

| | | | 1 | 2 | 3 | 4 | 5 | 6 | 7 | 8 | 9 |
|---|---|---|---|---|---|---|---|---|---|---|---|
| | | | | | | | Example | | | | |
| Water-soluble organic solvent | | Dipropylene glycol dimethyl ether | - | - | - | 5.0 | - | - | - | - | - |
| | | Tripropylene glycol monobutyl ether | - | - | - | - | 0.5 | - | - | - | - |
| | | 3-methoxy-3-methyl-1-butanol | - | - | - | - | - | 5.0 | - | - | - |
| | | Isopropanol | - | - | - | - | - | - | 10.0 | - | - |
| Water | | | 52.8 | 67.8 | 42.8 | 47.8 | 52.3 | 47.8 | 42.8 | 50.8 | 53.7 |
| Total | | | 100.0 | 100.0 | 100.0 | 100.0 | 100.0 | 100.0 | 100.0 | 100.0 | 100.0 |
| Storage stability | | | ○ | ○ | △ | ○ | ○ | ○ | ○ | ○ | ○ |
| Solid uniformity | | | △ | △ | △ | ○ | ○ | ○ | ○ | △ | △ |
| Thin line | | | ○ | ○ | ○ | ○ | ○ | ○ | ○ | ○ | ○ |
| Winding blocking property | | | ○ | ○ | ○ | ○ | ○ | ○ | ○ | ○ | ○ |
| Abrasion resistance | | | ○ | ○ | ○ | ○ | ○ | ○ | ○ | ○ | ○ |
| Alcohol resistance | | | ○ | △ | ○ | ○ | ○ | ○ | ○ | ○ | △ |
| Heat resistance | | | ○ | ○ | ○ | ○ | ○ | ○ | ○ | ○ | ○ |

| 10 | 11 | 12 | 13 | 14 | 15 | 16 | 17 | | | | |
|---|---|---|---|---|---|---|---|---|---|---|---|
| White ink base | | | | 23.3 | 23.3 | 23.3 | 23.3 | 23.3 | 23.3 | 23.3 | 23.3 |

| 10 | | 11 | 12 | 13 | 14 | 15 | 16 | 17 | | | |
|---|---|---|---|---|---|---|---|---|---|---|---|
| Acryl-based resin emulsion (solid content) | Acryl (Tg - 12°C) | Emulsified with polymer | PE-1126 | 20.0 | 20.0 | 20.0 | 20.0 | 20.0 | 20.0 | - | - |
| | Acryl (Tg - 24°C) | Emulsified with polymer | JE-1113 | - | - | - | - | - | - | 20.0 | - |
| | Acryl-styrene (Tg 15°C) | Emulsified with polymer | HE-1335 | - | - | - | - | - | - | - | 20.0 |
| | Acryl-styrene (Tg 53°C) | Emulsified with polymer | QE-1042 | - | - | - | - | - | - | - | - |
| | Acryl (Tg - 20°c) | Emulsified with emulsifier | Mowinyl 7320 | - | - | - | - | - | - | - | - |
| | Acryl (Tg - 13°C) | Emulsified with emulsifier | Mowinyl 730L | - | - | - | - | - | - | - | - |
| | Acryl (Tg - 13°C) | Emulsified with emulsifier | Neo-Cryl A-1125 | - | - | - | - | - | - | - | - |
| | Acryl-styrene (Tg 17°C) | Emulsified with emulsifier | Neo-Cryl A-1093 | - | - | - | - | - | - | - | - |
| Chlorinated polyolefin emulsion (solid content) | SUPERCHLON E480T | | | - | - | - | - | - | - | - | - |

| | | Example | | | | | | | |
|---|---|---|---|---|---|---|---|---|---|
| | | 10 | 11 | 12 | 13 | 14 | 15 | 16 | 17 |
| Hydrazide compound | Adipic acid dihydrazide | 5.0 | 1.0 | 1.0 | 1.0 | 1.0 | 1.0 | 1.0 | 1.0 |
| | N-oleoyl sarcosine | 0.9 | 0.1 | 5.0 | 0.9 | 0.9 | 0.9 | 0.9 | 0.9 |
| Wax emulsion (solid content) | AQUACER531 | - | - | - | 2.0 | - | - | - | - |
| | CHEMIPEARL W-400 | 2.0 | 2.0 | 2.0 | - | 0.1 | 10.0 | 2.0 | 2.0 |
| Water-soluble organic solvent | Dipropylene glycol dimethyl ether | - | - | - | - | - | - | - | - |
| | Tripropylene glycol monobutyl ether | - | - | - | - | - | - | - | - |
| | 3-methoxy-3-methyl-1-butanol | - | - | - | - | - | - | - | - |
| | Isopropanol | - | - | - | - | - | - | - | - |

EP 4 365 247 B1

(continued)

| | Example | | | | | | | |
|---|---|---|---|---|---|---|---|---|
| | 10 | 11 | 12 | 13 | 14 | 15 | 16 | 17 |
| Water | 48.8 | 53.6 | 48.7 | 52.8 | 54.7 | 44.8 | 52.8 | 52.8 |
| Total | 100.0 | 100.0 | 100.0 | 100.0 | 100.0 | 100.0 | 100.0 | 100.0 |
| Storage stability | △ | ○ | △ | ○ | ○ | △ | ○ | ○ |
| Solid uniformity | △ | △ | △ | △ | △ | △ | △ | △ |
| Thin line | ○ | ○ | ○ | ○ | ○ | ○ | ○ | ○ |
| Winding blocking property | ○ | ○ | ○ | △ | △ | ○ | △ | ○ |
| Abrasion resistance | ○ | ○ | ○ | ○ | ○ | ○ | ○ | ○ |
| Alcohol resistance | ○ | ○ | ○ | ○ | ○ | ○ | ○ | △ |
| Heat resistance | ○ | △ | ○ | ○ | ○ | ○ | ○ | ○ |

Table 2

| | | | | Comparative example | | | | | | | | | |
|---|---|---|---|---|---|---|---|---|---|---|---|---|---|
| | | | | 1 | 2 | 3 | 4 | 5 | 6 | 7 | 8 | 9 | 10 |
| White ink base | | | | 23.3 | 23.3 | 23.3 | 23.3 | 23.3 | 23.3 | 23.3 | 23.3 | 23.3 | 23.3 |
| Acryl-based resin emulsion (solid content) | Acryl (Tg -12°C) | Emulsified with polymer | PE-1126 | - | 1.0 | 20.0 | 20.0 | 20.0 | - | - | - | - | - |
| | Acryl (Tg -24°C) | Emulsified with polymer | JE-1113 | - | - | - | - | - | - | - | - | - | - |
| | Acryl-styrene (Tg 15°C) | Emulsified with polymer | HE-1335 | - | - | - | - | - | - | - | - | - | - |
| | Acryl-styrene (Tg 53°C) | Emulsified with polymer | Q E-1042 | - | - | - | - | - | 20.0 | - | - | - | - |
| | Acryl (Tg -20°C) | Emulsified with emulsifier | Mowinyl 7320 | - | - | - | - | - | - | 20.0 | - | - | - |
| | Acryl (Tg -13°C) | Emulsified with emulsifier | Mowinyl 730L | - | - | - | - | - | - | - | 20.0 | - | - |
| | Acryl (Tg -13°C) | Emulsified with emulsifier | Neo-Cryl A-1125 | - | - | - | - | - | - | - | - | 20.0 | - |
| | Acryl-styrene (Tg 17°C) | Emulsified with emulsifier | Neo-Cryl A-1093 | - | - | - | - | - | - | - | - | - | 20.0 |
| Chlorinated polyolefin emulsion (solid content) | SUPERCHLON E480T | | | - | - | - | - | - | - | - | - | - | - |
| Hydrazide compound | Adipic acid dihydrazide | | | 1.0 | 1.0 | - | 1.0 | 1.0 | 1.0 | 1.0 | 1.0 | 1.0 | 1.0 |
| N-oleoyl sarcosine | | | | 0.9 | 0.9 | 0.9 | - | 0.9 | 0.9 | 0.9 | 0.9 | 0.9 | 0.9 |
| Wax emulsion (solid content) | AQUACER531 | | | - | - | - | - | - | - | - | - | - | - |
| | CHEMIPEARL W-400 | | | 2.0 | 2.0 | 2.0 | 2.0 | - | 2.0 | 2.0 | 2.0 | 2.0 | 2.0 |

EP 4 365 247 B1

(continued)

| | | Comparative example | | | | | | | | | |
|---|---|---|---|---|---|---|---|---|---|---|---|
| | | 1 | 2 | 3 | 4 | 5 | 6 | 7 | 8 | 9 | 10 |
| Water-soluble organic solvent | Dipropylene glycol dimethyl ether | - | - | - | - | - | - | - | - | - | - |
| | Tripropylene glycol monobutyl ether | - | - | - | - | - | - | - | - | - | - |
| | 3-methoxy-3-methyl-1-butanol | - | - | - | - | - | - | - | - | - | - |
| | Isopropanol | - | - | - | - | - | - | - | - | - | - |
| Water | | 72.8 | 71.8 | 53.8 | 53.7 | 54.8 | 52.8 | 52.8 | 52.8 | 52.8 | 52.8 |
| Total | | 100.0 | 100.0 | 100.0 | 100.0 | 100.0 | 100.0 | 100.0 | 100.0 | 100.0 | 100.0 |
| Storage stability | | ○ | ○ | ○ | ○ | ○ | ○ | ○ | ○ | ○ | ○ |
| Solid uniformity | | △ | △ | △ | △ | △ | △ | △ | △ | △ | △ |
| Thin line | | ○ | ○ | ○ | ○ | ○ | ○ | ○ | ○ | ○ | ○ |
| Winding blocking property | | ○ | ○ | ○ | ○ | × | ○ | × | ○ | ○ | ○ |
| Abrasion resistance | | ○ | ○ | ○ | ○ | ○ | ○ | ○ | ○ | ○ | ○ |
| Alcohol resistance | | × | × | × | ○ | ○ | × | × | × | × | × |
| Heat resistance | | ○ | ○ | ○ | × | ○ | ○ | ○ | ○ | ○ | ○ |

**Claims**

1. An aqueous white ink composition for surface-printed flexible packaging, comprising a white pigment, an acryl-based resin emulsion emulsified with a polymer, N-oleoyl sarcosine, a hydrazine-based compound having at least two or more hydrazine residues in a molecule, and wax,

   wherein a content of the acryl-based resin emulsion is 3 to 40% by mass in terms of solid content, and
   wherein a glass transition temperature of the acryl-based resin emulsion, calculated as described in the description, is -40 to 30°C.

2. The aqueous white ink composition for surface-printed flexible packaging of claim 1, wherein the wax has an average particle size of 0.1 to 6 $\mu$m.

3. The aqueous white ink composition for surface-printed flexible packaging of claim 1 or 2, further comprising a water-soluble organic solvent.


**Patentansprüche**

1. Wässrige weiße Tintenzusammensetzung für oberflächenbedruckte flexible Verpackungen, umfassend ein weißes Pigment, eine mit einem Polymer emulgierte Acrylharzemulsion, N-Oleoylsarkosin, eine Hydrazinverbindung, die mindestens zwei oder mehr Hydrazinresten pro Molekül aufweist, und Wachs,

   wobei ein Gehalt der Acrylharzemulsion 3 bis 40 Masseprozent, bezogen auf den Feststoffgehalt, beträgt, und
   wobei die Glasübergangstemperatur der Acrylharzemulsion, berechnet wie in der Beschreibung angegeben, -40 bis 30°C beträgt.

2. Wässrige weiße Tintenzusammensetzung für oberflächenbedruckte flexible Verpackungen nach Anspruch 1, wobei das Wachs eine mittlere Partikelgröße von 0,1 bis 6 $\mu$m aufweist.

3. Wässrige weiße Tintenzusammensetzung für oberflächenbedruckte flexible Verpackungen nach Anspruch 1 oder 2, weiter umfassend ein wasserlösliches organisches Lösungsmittel.


**Revendications**

1. Composition d'encre blanche aqueuse pour emballage souple à surface imprimée, comprenant un pigment blanc, une émulsion de résine à base d'acrylique émulsionnée avec un polymère, de l'oléoyl sarcosine, un composé à base d'hydrazine présentant au moins deux résidus d'hydrazine dans une molécule, et de la cire,

   dans lequel la teneur en émulsion de résine à base d'acrylique est de 3 à 40 % en masse en termes de teneur en matière solide, et
   dans lequel la température de transition vitreuse de l'émulsion de résine à base d'acrylique, calculée comme décrit dans la description, est de -40 à 30 °C.

2. Composition d'encre blanche aqueuse pour emballage souple à surface imprimée selon la revendication 1, dans laquelle la cire présente une taille de particule moyenne de 0,1 à 6 $\mu$m.

3. Composition d'encre blanche aqueuse pour emballage souple à surface imprimée selon la revendication 1 ou 2, comprenant en outre un solvant organique hydrosoluble.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018076431 A
- JP 2020059822 A
- JP H11129613 A
- JP H11140365 A
- JP 2001234093 A